# DEMANDE DE BREVET EUROPEEN

(11) **EP 1 980 532 A1**
(43) Date de publication de la demande: **15.10.2008**
(21) Numéro de dépôt: 08290242.0
(22) Date de dépôt: 13.03.2008
(51) Int. Cl.: C01B 39/48, C01B 37/02, B01J 20/18, B01J 29/70

(54) **Procédé de préparation d'une zéolithe bêta**

(30) Priorité: 05.04.2007 FR 0702490
(71) Demandeur: IFP, 92852 Rueil-Malmaison Cédex (FR)
(72) Inventeur: Patarin, Joël, 68720 Flaxlanden (FR); Caullet, Philippe, 68110 Illzach (FR); Paillaud, Jean-Louis, 68100 Mulhouse (FR); Bats, Nicolas, 69320 Feyzin (FR)

(57) **Abrégé**

On décrit un procédé de préparation d'une zéolithe bêta comprenant au moins les étapes suivantes :
i) le mélange, en milieu aqueux, d'au moins une source d'au moins un élément tétravalent X, d'au moins une source d'anions fluorures et d'au moins un sel d'ammonium quaternaire de formule (H₃C)₂-N⁺-(CH₂CH₂C(CH₃)₃)₂,
ii) le traitement hydrothermal dudit mélange jusqu'à ce que ladite zéolithe bêta se forme.

## Description

### Domaine technique

La présente invention se rapporte à un nouveau procédé de préparation d'une zéolithe bêta réalisé en présence d'une espèce organique structurante comportant une fonction ammonium quaternaire. Ladite zéolithe bêta obtenue selon le procédé de l'invention trouve avantageusement son application en tant que catalyseur, adsorbant ou agent de séparation.

### Art antérieur

Les matériaux microporeux cristallisés, tels que les zéolithes ou les silicoaluminophosphates, sont des solides très utilisés dans l'industrie pétrolière en tant que catalyseur, support de catalyseur, adsorbant ou agent de séparation. Bien que de nombreuses structures cristallines microporeuses aient été découvertes, l'industrie du raffinage et de la pétrochimie est toujours à la recherche de nouvelles structures zéolitiques qui présentent des propriétés particulières pour des applications comme la purification ou la séparation des gaz, la conversion d'espèces carbonées ou autres.
La zéolithe bêta est un solide connu qui est décrit comme étant constitué d'une intercroissance très désordonnée de deux polymorphes, le polymorphe A et le polymorphe B, qui sont habituellement trouvés dans un rapport 60 : 40 (J.M. Newsam et al., Proc. R. Soc. London A, 420, 375 (1988).
De nombreuses méthodes de préparation de zéolithes bêta sont également décrites dans la littérature. Beaucoup de ces méthodes utilisent une espèce organique comme agent structurant pour la préparation d'une zéolithe bêta. Camblor et al. dans Microporous and Mesoporous Materials, 48, 11-22 (2001) propose de nombreux exemples d'espèces organiques permettant la synthèse de zéolithes bêta telles que les cations tétraéthylammonium, 6-azoniaspiro[5,5]undécane, N,N,N,N',N',N'-hexaméthyldecane-1,10-diammonium. Arranz et al. dans Stud. Surf. Sci. Catal., 154, 257-264 (2004) décrivent l'utilisation du cation dibenzyldiméthylammonium comme espèce organique structurante dans la synthèse de la zéolithe bêta.

### Description sommaire de l'invention

La présente invention a pour objet un procédé de préparation d'une zéolithe bêta comprenant au moins les étapes suivantes :
i) le mélange, en milieu aqueux, d'au moins une source d'au moins un élément tétravalent X, d'au moins une source d'anions fluorures et d'au moins un sel d'ammonium quaternaire de formule (H₃C)₂-N⁺-(CH₂CH₂C(CH₃)₃)₂,
ii) le traitement hydrothermal dudit mélange jusqu'à ce que ladite zéolithe bêta se forme.

Il a été découvert que ledit sel d'ammonium quaternaire de formule (H₃C)₂-N⁺-(CH₂CH₂C(CH₃)₃)₂ mis en mélange avec au moins une source d'au moins un élément tétravalent, au moins une source d'anions fluorures et de l'eau conduit à la production d'une zéolithe bêta de haute pureté. Toute autre phase cristallisée ou amorphe est généralement et très préférentiellement absente du solide cristallisé constitué de zéolithe bêta obtenu à l'issue du procédé de préparation.

### Description détaillée de l'invention

La présente invention a pour objet un procédé de préparation d'une zéolithe bêta comprenant au moins les étapes suivantes :
i) le mélange, en milieu aqueux, d'au moins une source d'au moins un élément tétravalent X, d'au moins une source d'anions fluorures et d'au moins un sel d'ammonium quaternaire de formule (H₃C)₂-N⁺-(CH₂CH₂C(CH₃)₃)₂,
ii) le traitement hydrothermal dudit mélange jusqu'à ce que ladite zéolithe bêta se forme.

Conformément au procédé de l'invention, le sel d'ammonium quaternaire de formule (H₃C)₂-N⁺-(CH₂CH₂C(CH₃)₃)₂, correspondant au cation N,N-diméthyl-N,N-di(3,3-diméthylbutyl)ammonium, joue le rôle de structurant de la zéolithe bêta préparée selon le procédé de l'invention. Le sel du N,N-diméthyl-N,N-di(3,3-diméthylbutyl)ammonium, introduit dans le mélange pour la mise en oeuvre de l'étape i) du procédé de l'invention, peut être un halogénure, un hydroxyde, un sulfate, un silicate ou un aluminate du N,N-diméthyl-N,N-di(3,3-diméthylbutyl)ammonium. De manière très préférée, on utilise comme sel d'ammonium quaternaire pour la mise en oeuvre de ladite étape i) du procédé de l'invention l'hydroxyde de N,N-diméthyl-N,N-di(3,3-diméthylbutyl)ammonium. Cette espèce, sous sa forme hydroxyde, peut être obtenue à partir d'un halogénure de N,N-diméthyl-N,N-di(3,3-diméthylbutyl)ammonium. De manière préférée, l'hydroxyde de N,N-diméthyl-N,N-di(3,3-diméthylbutyl)ammonium est obtenu par traitement à température ambiante d'une solution de bromure de N,N-diméthyl-N,N-di(3,3-diméthylbutyl)ammonium avec de l'oxyde d'argent. Le bromure de N,N-diméthyl-N,N-di(3,3-diméthylbutyl)ammonium peut être préparé par des méthodes connues de l'Homme du métier. Une méthode possible de préparation du bromure de N,N-diméthyl-N,N-di(3,3-diméthylbutyl)ammonium est donnée par le schéma réactionnel suivant :

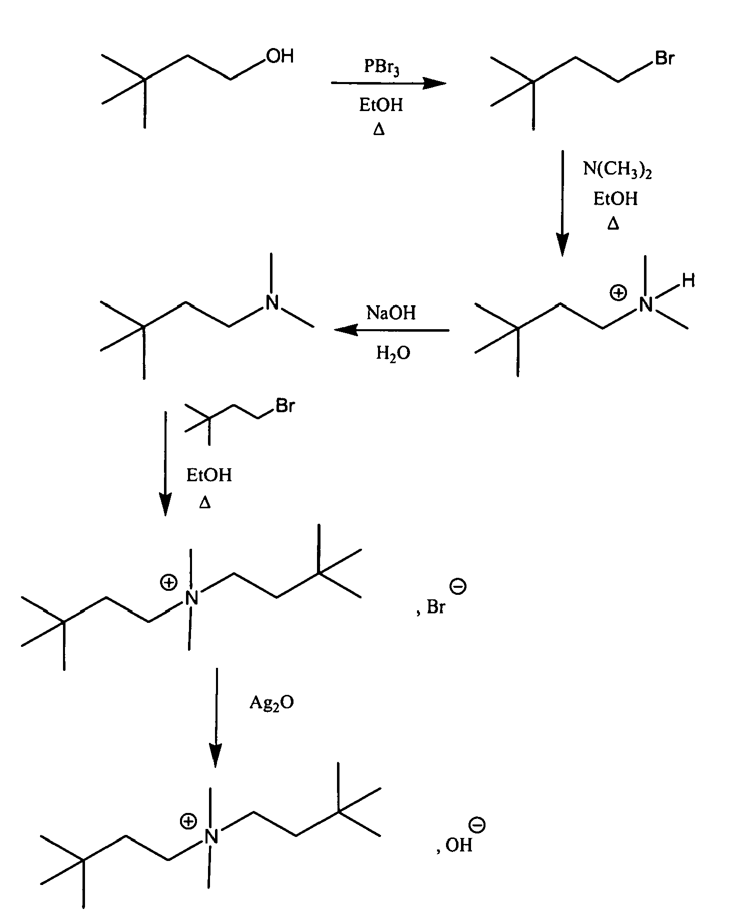

Conformément à l'invention, au moins une source d'au moins un élément tétravalent X est incorporée dans le mélange pour la mise en oeuvre de l'étape (i) du procédé de préparation. X est préférentiellement choisi parmi le silicium, le titane et le mélange de ces deux éléments tétravalents et très préférentiellement X est le silicium. La ou les source(s) du(es)dit(s) élément(s) tétravalent(s) peu(ven)t être tout composé comprenant l'élément X et pouvant libérer cet élément en solution aqueuse sous forme réactive. L'élément X peut être incorporé dans le mélange sous une forme oxydée XO₂ ou sous tout autre forme. Lorsque X est le titane, on utilise avantageusement Ti(EtO)₄ comme source de titane. Dans le cas préféré où X est le silicium, la source de silicium peut être l'une quelconque desdites sources couramment utilisée pour la synthèse de zéolithes, par exemple de la silice en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telle que "LUDOX". De manière préférée, la source de silicium est le tétraéthoxysilane (TEOS).

Conformément à l'invention, au moins une source d'anions fluorures F⁻ est employée pour la mise en oeuvre de l'étape i) du procédé de préparation de l'invention. On utilise, comme source d'anions fluorures, un sel de fluorure tel que NH₄F, NaF, KF, LiF et le mélange d'au moins deux de ces sels ou l'acide fluorhydrique HF. De manière préférée, la source d'anions fluorures est l'acide fluorhydrique HF en solution aqueuse.

Selon un premier mode préféré de réalisation du procédé de l'invention, au moins une source d'au moins un élément trivalent Y est incorporée dans le mélange pour la mise en oeuvre de ladite étape (i) du procédé de préparation selon l'invention. Ledit élément trivalent Y est choisi parmi l'aluminium, le bore, le fer, l'indium, le gallium ou le mélange d'au moins deux de ces éléments trivalents et très préférentiellement Y est l'aluminium. La ou les source(s) du(es)dit(s) élément(s) trivalent(s) peu(ven)t être tout composé comprenant l'élément Y et pouvant libérer cet élément en solution aqueuse sous forme réactive. L'élément Y peut être incorporé dans le mélange sous une forme oxydée YOₙ avec 1 ≤ n ≤ 3 (n étant un nombre entier ou un nombre rationnel), ou sous toute autre forme. Dans le cas préféré où Y est l'aluminium, la source d'aluminium est de préférence de l'aluminate de sodium, ou un sel d'aluminium, par exemple du chlorure, du nitrate, de l'hydroxyde ou du sulfate, un alkoxyde d'aluminium par exemple l'isopropoxyde d'alumium, ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Selon un deuxième mode préféré de réalisation du procédé selon l'invention, au moins un métal alcalin et/ou alcalino-terreux M est incorporé dans le mélange pour la mise en oeuvre de ladite étape (i) du procédé de préparation selon l'invention et est choisi parmi le lithium, le potassium, le sodium, le magnésium et le calcium et le mélange d'au moins deux de ces métaux. De préférence, ledit métal M est un métal alcalin et de manière très préférée il s'agit du sodium.

Conformément au procédé de préparation selon l'invention, le mélange réactionnel obtenu à l'étape (i) présente une composition molaire exprimée par la formule XO₂ : v YOₙ : w M_{2/m}O : x F⁻ : y H₂O : z R⁺ dans laquelle
- v étant compris entre 0 et 0,5, de préférence entre 0,01 et 0,3,
- w étant compris entre 0 et 1, de préférence entre 0,01 et 0,5,
- x étant compris entre 0,05 et 2, de préférence entre 0,1 et 1,5,
- y étant compris entre 1 et 50, de préférence entre 2 et 10,
- z étant compris entre 0,01 et 6, de préférence entre 0,05 et 4,
- n étant compris entre 1 et 3 (n étant un nombre entier ou rationnel),
- m étant égal à 1 ou 2
et où X, Y et M ont la même définition que précédemment, à savoir X est un ou plusieurs élément(s) tétravalent(s) choisi(s) dans le groupe formé par les éléments suivants : silicium et titane, de manière très préférée X est le silicium, Y est un ou plusieurs élément(s) trivalent(s) choisi(s) dans le groupe formé par les éléments suivants : aluminium, fer, bore, indium et gallium, de manière très préférée Y est l'aluminium et où M est un ou plusieurs métal(aux) alcalin(s) et/ou alcalino-terreux choisi(s) parmi le lithium, sodium, le potassium, le calcium, le magnésium et le calcium et mélange d'au moins deux de ces métaux, de manière très préférée M est le sodium, R⁺ est le cation ammonium quaternaire N,N-diméthyl-N,N-di(3,3-diméthylbutyl)ammonium, v, w, x, y et z représentant respectivement le nombre de moles de YOₙ, de M_{2/m}O, de F⁻, de H₂O et de R⁺.

L'étape (i) du procédé selon l'invention consiste à préparer un mélange réactionnel aqueux appelé gel et renfermant au moins une source d'au moins un élément tétravalent X, de préférence un oxyde XO₂, éventuellement au moins une source d'au moins un élément trivalent Y, de préférence un oxyde YOₙ, au moins un sel du N,N-diméthyl-N,N-di(3,3-diméthylbutyl)ammonium, au moins une source d'anions fluorures, éventuellement au moins une source d'un ou plusieurs métal(aux) alcalin(s) et/ou alcalino-terreux. Les quantités desdits réactifs sont ajustées de manière à conférer à ce gel une composition permettant sa cristallisation en une zéolithe bêta.

Il peut être avantageux d'additionner des germes au mélange réactionnel au cours de ladite étape i) du procédé de l'invention afin de réduire le temps nécessaire à la formation des cristaux de zéolithe bêta et/ou la durée totale de cristallisation. Lesdits germes favorisent également la formation de ladite zéolithe bêta au détriment d'impuretés. De tels germes comprennent des solides cristallisés, notamment des cristaux de zéolithe bêta. Les germes cristallins sont généralement ajoutés dans une proportion comprise entre 0,01 et 10 % de la masse de la source de l'élément X, de préférence de l'oxyde XO₂, utilisée dans le mélange réactionnel.

Conformément à l'étape (ii) du procédé selon l'invention, le gel est soumis à un traitement hydrothermal, préférentiellement réalisé à une température comprise entre 80°C et 200°C, jusqu'à ce que la zéolithe bêta se forme. Le gel est avantageusement mis sous conditions hydrothermales sous une pression de réaction autogène, éventuellement en ajoutant du gaz, par exemple de l'azote, à une température comprise entre 80°C et 200°C, de préférence entre 140°C et 180°C, jusqu'à la formation des cristaux de zéolithe bêta. La durée nécessaire pour obtenir la cristallisation varie généralement entre 1 et 50 jours, de préférence entre 1 et 21 jours et de manière plus préférée entre 5 et 16 jours. La mise en réaction s'effectue généralement sous agitation ou en absence d'agitation, de préférence en présence d'agitation.

A la fin de la réaction, lorsque ladite zéolithe bêta est formée à la suite de la mise en oeuvre de ladite étape ii) du procédé de préparation selon l'invention, la phase solide formée de la zéolithe bêta est filtrée, lavée puis séchée. Le séchage est généralement réalisé à une température comprise entre 20 et 150°C, de préférence entre 60 et 120°C, pendant une durée comprise entre 5 et 20 heures. La zéolithe bêta, séchée, est généralement analysée par diffraction des rayons X, cette technique permettant également de déterminer la pureté de ladite zéolithe obtenue par le procédé de l'invention. De manière très avantageuse, le procédé de l'invention conduit à la formation d'une zéolithe bêta, en l'absence de toute autre phase cristallisée ou amorphe. Ladite zéolithe, après l'étape de séchage, est ensuite prête pour des étapes ultérieures telles que la calcination et l'échange d'ions. Pour ces étapes, toutes les méthodes conventionnelles connues de l'Homme du métier peuvent être employées.

La calcination de la zéolithe bêta obtenue selon le procédé de l'invention est préférentiellement réalisée à une température comprise entre 500 et 700°C pendant une durée comprise entre 5 et 15 heures. La zéolithe bêta obtenue à l'issue de l'étape de calcination est dépourvue de toute espèce organique et en particulier du sel d'ammonium quaternaire de formule (H₃C)₂-N⁺-(CH₂CH₂C(CH₃)₃)₂.

En règle générale, le ou les cation(s) M de la zéolithe bêta obtenue par le procédé de l'invention, peu(ven)t être remplacé(s) par un ou des cation(s) quelconques de métaux et en particulier ceux des groupes IA, IB, IIA, IIB, IIIA, IIIB (y compris les terres rares), VIII (y compris les métaux nobles) de même que par le plomb, l'étain et le bismuth. L'échange est réalisé au moyen de sels hydrosolubles quelconques contenant le cation approprié.

Il est également avantageux d'obtenir la forme hydrogène de la zéolithe bêta obtenue par le procédé selon l'invention. Ladite forme hydrogène peut être obtenue en effectuant un échange d'ions avec un acide, en particulier un acide minéral fort comme l'acide chlorhydrique, sulfurique ou nitrique, ou avec un composé tel que le chlorure, le sulfate ou le nitrate d'ammonium. L'échange d'ions peut être effectué par mise en suspension de ladite zéolithe bêta en une ou plusieurs fois avec la solution d'échange d'ions. Ladite zéolithe peut être calcinée avant ou après l'échange d'ions, ou entre deux étapes d'échange d'ions. La zéolithe est, de préférence, calcinée avant l'échange d'ions, afin d'éliminer toute substance organique incluse dans la porosité de la zéolithe, dans la mesure où l'échange d'ions s'en trouve facilité.

La zéolithe bêta obtenue par le procédé de l'invention peut être utilisée après échange ionique comme solide acide pour la catalyse dans les domaines du raffinage et de la pétrochimie. Elle peut également être utilisée comme adsorbant pour le contrôle de la pollution ou comme tamis moléculaire pour la séparation.

Par exemple, lorsqu'elle est utilisée comme catalyseur, la zéolithe préparée selon le procédé de l'invention, est calcinée, échangée et est de préférence sous forme hydrogène, et peut être associée à une matrice inorganique, qui peut être inerte ou catalytiquement active, et à une phase métallique. La matrice inorganique peut être présente simplement comme liant pour maintenir ensemble les petites particules de la zéolithe sous les différentes formes connues des catalyseurs (extrudés, pastilles, billes, poudres), ou bien peut être ajoutée comme diluant pour imposer le degré de conversion dans un procédé qui progresserait sinon à une allure trop rapide conduisant à un encrassement du catalyseur en conséquence d'une formation importante de coke. Des matrices inorganiques typiques sont notamment des matières de support pour les catalyseurs comme la silice, les différentes formes d'alumine, la magnésie, la zircone, les oxydes de titane, de bore, de titane, de zirconium, les phosphates d'aluminium, les argiles kaoliniques, les bentonites, les montmorillonites, la sépiolite, l'attapulgite, la terre à foulon, les matières poreuses synthétiques comme SiO₂-Al₂O₃, SiO₂-ZrO₂, SiO₂-ThO₂, SiO₂-BeO, SiO₂-TiO₂ ou toute combinaison de ces composés. La matrice inorganique peut être un mélange de différents composés, en particulier d'une phase inerte et d'une phase active.

La zéolithe préparée selon le procédé de l'invention peut également être associée à au moins une autre zéolithe et jouer le rôle de phase active principale ou d'additif.

La phase métallique est introduite sur la zéolithe seule, la matrice inorganique seule ou l'ensemble matrice inorganique-zéolithe par échange d'ions ou imprégnation avec des cations ou oxydes choisis parmi les éléments suivants : Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments. Les métaux peuvent être introduits soit tous de la même façon, soit par des techniques différentes, à tout moment de la préparation, avant ou après mise en forme et dans n'importe quel ordre. De plus, des traitements intermédiaires tels que par exemple une calcination et/ou une réduction peuvent être appliqués entre les dépôts des différents métaux.

Les compositions catalytiques comportant la zéolithe bêta préparée selon le procédé de l'invention, conviennent de façon générale à la mise en oeuvre des principaux procédés de transformation d'hydrocarbures et des réactions de synthèse de composés organiques tels que les éthers.

Toute méthode de mise en forme connue de l'homme du métier convient pour le catalyseur comportant la zéolithe bêta. On pourra utiliser, par exemple, le pastillage ou l'extrusion ou la mise sous forme de billes. La mise en forme du catalyseur contenant la zéolithe préparée selon le procédé de l'invention et se présentant au moins en partie sous forme acide est généralement telle que le catalyseur est de préférence sous forme d'extrudés ou de billes en vue de son utilisation.

L'invention est illustrée par les exemples suivants qui ne présentent, en aucun cas, un caractère limitatif.

### Exemple 1 : synthèse du structurant organique azoté, l'hydroxyde de N,N-diméthyl-N,N-di(3,3-diméthylbutyl)ammonium.

On prépare un mélange contenant 1 g (0,77.10⁻² moles) de N,N,3,3-tétraméthylbutylamine (Aldrich) et 1,917 g (1,16.10⁻² moles) de 1-bromo-3,3-diméthylbutane (Prolabo) et environ 4 ml d'isopropanol. On ajoute ensuite 1,23 g (1,16.10⁻² mole) de carbonate de sodium. Cette suspension est portée à reflux durant 2 jours à la température de 100°C. Un solide blanc apparaît et après cette durée, on ajoute au mélange réactionnel environ 5 ml de diéthyléther de manière à augmenter la quantité de précipité. L'isopropanol et le diéthyléther sont alors évaporés à 30°C à l'aide d'un évaporateur rotatif. Le produit organique formé est extrait du mélange réactionnel à l'aide de dichlorométhane. Trois extractions successives avec 10 ml de dichlorométhane sont effectuées. La phase organique obtenue est évaporée à l'aide d'un évaporateur rotatif. Le solide blanc formé est lavé au diéthyléther sec et filtré sur membrane Nylon (0 = 0,2 µm). On obtient alors 0,8 g (0,27.10⁻² moles) de bromure de N,N-diméthyl-N,N-di(3,3-diméthylbutyl)ammonium (DMDMBA-Br). La nature de l'espèce obtenue a été vérifiée par résonance magnétique nucléaire du proton, les résultats de cette analyse sont donnés ci-après. RMN ¹H (D₂O, 400 MHz, 25°C, δ ppm/TMS) : 0,83 (s, 18H), 1,51-1,55 (m, 4H), 2,91 (s, 6H), 3,18-3,23 (m, 4H).

Un excès d'oxyde d'argent (Ag₂O) est mis au contact d'une solution aqueuse de DMDMBA-Br (1,5 mole Ag₂O pour 1 mole DMDMBA-Br). Ce mélange est maintenu sous agitation pendant une nuit à température ambiante. Le bromure d'argent qui se forme alors est séparé de la solution par centrifugation. Le liquide surnageant est une solution d'hydroxyde de N,N-diméthyl-N,N-di(3,3-diméthylbutyl)ammonium. La concentration de cette solution est déterminée par résonance magnétique nucléaire du proton.

### Exemple 2 : Synthèse d'une zéolithe bêta purement silicique

On verse dans un bécher en polypropylène 2,04 g de solution aqueuse à 28,3% en masse d'hydroxyde de N,N-diméthyl-N,N-di(3,3-diméthylbutyl)ammonium (ROH) et 1,04 g de tétraéthoxysilane (Aldrich). On évapore, à température ambiante et sous agitation, l'éthanol et l'excès d'eau jusqu'à ce que l'on atteigne une masse de 1,2525 g. On ajoute alors 0,125 g d'acide fluorhydrique à 40% en masse dans l'eau (Fluka) et on agite jusqu'à formation d'une pâte homogène. Le gel est ensuite transféré dans une chemise en téflon puis la chemise est placée dans un autoclave de 20 millilitres.
La composition molaire du gel est 1 SiO₂ : 0,5 ROH : 0,5 HF : 5 H₂O.
L'autoclave est chauffé pendant 14 jours à 170°C dans une étuve. Pendant la synthèse, l'autoclave est continuellement agité, l'axe longitudinal de l'autoclave tournant avec une vitesse d'environ 15 tours/minute dans un plan perpendiculaire à l'axe de rotation. Le pH de synthèse est proche de 9. Après filtration, le produit est lavé à l'eau distillée et séché une nuit à 70°C.
Le produit solide séché a été analysé par diffraction de rayons X sur poudres : le solide cristallisé obtenu est une zéolithe bêta pure.

### Exemple 3 : Synthèse d'une zéolithe bêta purement silicique

On verse dans un bécher en polypropylène 4,081 g de solution aqueuse à 28,3% en masse d'hydroxyde de N,N-diméthyl-N,N-di(3,3-diméthylbutyl)ammonium (ROH) et 1,04 g de tétraéthoxysilane (Aldrich). On évapore, à température ambiante et sous agitation, l'éthanol et l'excès d'eau jusqu'à ce que l'on atteigne une masse de 1,836 g. On ajoute alors 0,25 g d'acide fluorhydrique à 40% en masse dans l'eau (Fluka) et on agite jusqu'à formation d'une pâte homogène. Le gel est ensuite transféré dans une chemise en téflon puis la chemise est placée dans un autoclave de 20 millilitres.
La composition molaire du gel est 1 SiO₂ : 1 ROH : 1 HF : 5,9 H₂O.
L'autoclave est chauffé pendant 14 jours à 170°C dans une étuve. Pendant la synthèse, l'autoclave est continuellement agité, l'axe longitudinal de l'autoclave tournant avec une vitesse d'environ 15 tours/minute dans un plan perpendiculaire à l'axe de rotation. Le pH de synthèse est proche de 9. Après filtration, le produit est lavé à l'eau distillée et séché une nuit à 70°C.
Le produit solide séché a été analysé par diffraction de rayons X sur poudres : le solide cristallisé obtenu est une zéolithe bêta pure.

### Exemple 4 : Synthèse d'une zéolithe bêta alumino-silicigue.

On verse dans un bécher en polypropylène 4,081 g de solution aqueuse à 28,3% en masse d'hydroxyde de N,N-diméthyl-N,N-di(3,3-diméthylbutyl)ammonium (ROH) et 1,04 g de tétraéthoxysilane (Aldrich) et 0,02 g d'isopropoxyde d'aluminium (Aldrich). On évapore, à température ambiante et sous agitation, l'éthanol, le propanol et l'excès d'eau jusqu'à ce que l'on atteigne une masse de 1,76 g. On ajoute alors 0,25 g d'acide fluorhydrique à 40% en masse dans l'eau (Fluka) et on agite jusqu'à formation d'une pâte homogène. Le gel est ensuite transféré dans une chemise en téflon puis la chemise est placée dans un autoclave de 20 millilitres.
La composition molaire du gel est 1 SiO₂ : 0,01 Al₂O₃ : 1 ROH : 1 HF : 5 H₂O.
L'autoclave est chauffé pendant 14 jours à 170°C dans une étuve. Pendant la synthèse, l'autoclave est continuellement agité, l'axe longitudinal de l'autoclave tournant avec une vitesse d'environ 15 tours/minute dans un plan perpendiculaire à l'axe de rotation. Le pH de synthèse est proche de 9. Après filtration, le produit est lavé à l'eau distillée et séché une nuit à 70°C.
Le produit solide séché a été analysé par diffraction de rayons X sur poudres : le solide cristallisé obtenu est une zéolithe bêta pure.

### EXEMPLE 5 : Préparation d'un catalyseur à partir d'une zéolithe bêta synthétisée dans le système Si-Al, avec le N,N-diméthyl-N,N-di(3,3-diméthylbutyl)ammonium comme structurant organique azoté.

La zéolithe utilisée dans cet exemple est la zéolithe bêta brute de synthèse obtenue dans le système Si-Al de l'exemple 4 comprenant le N,N-diméthyl-N,N-di(3,3-diméthylbutyl)ammonium dans sa porosité intracristalline.
Cette zéolithe bêta subit tout d'abord une calcination dite sèche à 550°C sous flux d'air durant 8 heures de manière à éliminer le N,N-diméthyl-N,N-di(3,3-diméthylbutyl)ammonium. Le solide obtenu est alors mis sous forme d'extrudés par malaxage avec de la boehmite (Pural SB3, Sasol) dans un malaxeur à bras en Z et extrusion de la pâte obtenue avec une extrudeuse piston. Les extrudés sont alors séchés à 120°C pendant 12 heures sous air et calcinés à 550°C pendant 2 heures sous flux d'air dans un four à moufle. Ils constituent le support du catalyseur.
Du platine est déposé sur l'alumine de ce support par échange anionique avec de l'acide hexachloroplatinique en présence d'un agent compétiteur (acide chlorhydrique). Le support échangé est ensuite séché à 120°C pendant 12 heures sous air et calciné à 550°C sous débit d'air sec pendant 1 heure.
Le catalyseur ainsi préparé est composé en teneurs pondérales de 50% de zéolithe bêta forme hydrogène, de 49,8% d'alumine et de 0,2% de platine.

## Revendications

1. Procédé de préparation d'une zéolithe bêta comprenant au moins les étapes suivantes :
i) le mélange, en milieu aqueux, d'au moins une source d'au moins un élément tétravalent X, d'au moins une source d'anions fluorures et d'au moins un sel d'ammonium quaternaire de formule (H₃C)₂-N⁺-(CH₂CH₂C(CH₃)₃)₂,
ii) le traitement hydrothermal dudit mélange jusqu'à ce que ladite zéolithe bêta se forme.

2. Procédé de préparation selon la revendication 1 tel que le sel d'ammonium quaternaire employé pour la mise en oeuvre de ladite étape i) est l'hydroxyde de N,N-diméthyl-N,N-di(3,3-diméthylbutyl)ammonium.

3. Procédé de préparation selon la revendication 1 ou la revendication 2 tel que l'élément tétravalent X est le silicium.

4. Procédé de préparation selon l'une des revendications 1 à 3 tel que ladite source d'anions fluorures est l'acide fluorhydrique.

5. Procédé de préparation selon l'une des revendications 1 à 4 tel que au moins une source d'au moins un élément trivalent Y est incorporée dans le mélange pour la mise en oeuvre de ladite étape i).

6. Procédé de préparation selon la revendication 5 tel que ledit élément Y est l'aluminium.

7. Procédé de préparation selon l'une des revendications 1 à 6 tel que au moins un métal alcalin et/ou alcalino-terreux M est incorporé dans le mélange pour la mise en oeuvre de ladite étape (i).

8. Procédé de préparation selon l'une des revendications 1 à 7 tel que le mélange réactionnel obtenu à l'étape (i) présente une composition molaire exprimée par la formule XO₂ : v YOₙ : w M_{2/m}O : x F⁻ : y H₂O : z R⁺, dans laquelle v est compris entre 0 et 0,5, w est compris entre 0 et 1, x est compris entre 0,05 et 2, y est compris entre 1 et 50, z est compris entre 0,01 et 6, n est compris entre 1 et 3 (n étant un nombre entier ou rationnel), m est égal à 1 ou 2, R⁺ est le cation ammonium quaternaire N,N-diméthyl-N,N-di(3,3-diméthylbutyl)ammonium, v, w, x, y et z représentant respectivement le nombre de moles de YOₙ, de M_{2/m}O, de F⁻, de H₂O et de R⁺.

9. Procédé de préparation selon l'une des revendications 1 à 8 tel que des germes sont additionnés au mélange réactionnel au cours de ladite étape i).

10. Procédé de préparation selon l'une des revendications 1 à 9 tel que ledit traitement hydrothermal selon ladite étape ii) est réalisé à une température comprise entre 80°C et 200°C.

11. Procédé de préparation selon l'une des revendications 1 à 10 tel que la phase solide formée de la zéolithe bêta, obtenue à l'issue de ladite étape ii), est filtrée, lavée puis séchée.
